Europäisches Patentamt

European Patent Office

Office européen des brevets

(11) Veröffentlichungsnummer: **0 006 521**
**B2**

(12) # NEUE EUROPÄISCHE PATENTSCHRIFT

(45) Veröffentlichungstag der neuen Patentschrift:
25.01.89

(21) Anmeldenummer: 79101871.6

(22) Anmeldetag: 11.06.79

(51) Int. Cl.⁴: **C 08 L 55/02,** C 08 K 5/54,
C 08 K 5/09, C 08 K 5/20

(54) Verwendung flüssiger Silikone im Verein mit Stearinsäurederivaten als Zusätze bei der Herstellung kerbschlagfester ABS-Polymere.

(30) Priorität: 23.06.78 DE 2827594

(43) Veröffentlichungstag der Anmeldung:
09.01.80 Patentblatt 80/1

(45) Bekanntmachung des Hinweises auf die Patenterteilung:
28.10.81 Patentblatt 81/43

(45) Bekanntmachung des Hinweises auf die Entscheidung
über den Einspruch:
25.01.89 Patentblatt 89/4

(84) Benannte Vertragsstaaten:
BE DE FR GB IT NL

(56) Entgegenhaltungen:
DE-A-1 915 789
DE-A-2 061 216
DE-B-1 021 162
DE-B-1 694 733
FR-A-2 360 617

Bulletin 22-290-01 Dow Corning
Modern Plastics Encyclopedia 1977-1978, S. 206, 208
Modern Plastics Encyclopedia 1976-1977, S. 200, 202

Die Akte enthält technische Angaben, die nach
dem Eingang der Anmeldung eingereicht wurden
und die nicht in dieser Patentschrift enthalten sind.

(73) Patentinhaber: BAYER AG, Konzernverwaltung RP
Patentabteilung, D-5090 Leverkusen 1 Bayerwerk
(DE)

(72) Erfinder: Arnold, Bernhard, Erftstrasse 2, D-5024
Pulheim (DE)
Erfinder: Kowitz, Friedrich, Dr., Friedrich- Ebert-
Strasse 44, D-4047 Dormagen 1 (DE)
Erfinder: Kuhlmann, Dieter, Dr., Reiherweg 31,
D-5024 Pulheim (DE)
Erfinder: Ott, Karl- Heinz, Dr., Paul- Klee- Strasse
54, D-5090 Leverkusen 1 (DE)
Erfinder: Morbitzer, Leo, Dr., Rungestrasse 50,
D-5000 Köln 80 (DE)

EP 0 006 521 B2

**Beschreibung**

Unter ABS-Polymeren werden im folgenden Gemische aus Pfropfprodukten und thermoplastischen Harzen verstanden. Die Pfropfprodukte oder Propfkautschuke sind dabei Polymerisate von ethylenisch ungesättigten Monomeren, die in Gegenwart eines Kautschuks polymerisiert worden sind. Thermoplastische Harze werden aus entsprechenden Monomeren erzeugt, sie bilden in der Mischung die kontinuierliche Phase (Matix) und werden im folgenden auch als SAN-Harze bezeichnet.

Die Herstellung von ABS-Polymerisaten erfordert neben dem eigentlichen Polymerisationsprozess eine Compoundierung, bei der Pfropfkautschuk und thermoplastisches Harz intensiv gemischt und gleichzeitig für die nachfolgende Weiterverarbeitung oder den Gebrauch notwendiger Additive eingearbeitet werden. Hierzu zählen Gleitmittel, Pigmente und Antistatika.

Als Mischaggregate finden meist Innenkneter oder zwei- bis vierwellige Schneckenkneter Verwendung, an die ein Zweiwalzenstuhl mit Bandgranulator bzw. ein Strang- oder Unterwassergranulator angeschlossen ist. Die Auswahl des Compoundierungsaggregats richtet sich nach dem ABS-Herstellungsprozess. Fällt z. B. das SAN-Harz als Lösungspolymersat an, so mischt man mit dem getrennt hergestellten Pfropfkautschuk in einem Schneckenkneter; benutzt man Emulsionspolymerisation, so wird das primär resultierende Pulver oft in einem Innenkneter weiterbehandelt.

Im allgemeinen setzt man zirka 1 bis 3 Gew.-% eines Gleitmittels als Verarbeitungshilfe zu, um das Fliessverhalten der ABS-Polymerisate zu verbessern und um innere Spannungen in den daraus hergestellten Formteilen zu verringern. Geeignet sind z. B. Alkali- und Erdalkalisalze von Fettsäuren, Fettsäureester von ein- oder mehrwertigen Alkoholen und Amide langkettiger Fettsäuren und Sulfonsäuren

Der Erfindung liegt die Erkenntnis zugrunde, daß durch Zusatz sehr geringer Mengen Silikonöle zu bestimmten ABS-Polymerisaten zwar nicht die Fließfähigkeit, wohl aber die Schlagzähigkeit und Kerbschlagzähigkeit, insbesondere auch bei tiefen Temperaturen, erheblich verbessert wird. Gegenstand der Erfindung ist die Verwendung von 0,05 - 0,5 Gew.-% eines flüssigen Polymethylphenylsiloxans oder eines flüssigen Polydimethylsiloxans einer Viskosität von $2.10^{-5}$ bis $10^{-1}$ m²·s⁻¹ bei 20°C, zusammen mit 0,25 bis 5 Gew.-Teilen, jeweils bezogen auf 100-Gew.-Teile ABS-Polymerisat, bestehend aus

I    90 bis 10 Gew.-Tln einer bimodalen Pfropfproduktmischung aus

    A 90 bis 20 Gew.-Tln eines Pfropfproduktes von 20 - 60 Gew.-Tln Styrol und Acrylnitril im Gewichtsverhältnis 88 : 12 bis 60 : 40 auf 80 - 40 Gew.-Tle eines Butadien-Homo-Polymerisats mit einem mittleren Teilchendurchmesser $d_{50}$ von 0,35 bis 0,65 μm und

    B 10 bis 80 Gew.-Tln eines Pfropfproduktes von 60 bis 40 Gew.-Tln einer Mischung aus Styrol und Acrylnitril im Gew.-Verhältnis 80 : 20 bis 60 : 40 auf 40 bis 60 Gew.-Tle eines Butadien-Homo-Polymerisats mit einem mittleren Teilchendurchmesser $d_{50}$ von 0,08 bis 0,25 μm und

II    10 bis 90 Gew.-Tln eines Copolymerisats

    C aus Styrol und/oder Methylstyrol einersats und Acrylnitril andererseits, im Gewichtsverhältnis 80 : 20 bis 60 : 40 bei einem mittleren Molekulargewicht von 50.000 bis 300.000,

Pentaerythrittetrastearat, Bistearylamid des Ethylendiamins oder Mischungen daraus zur Verbesserung der Kerbschlagzähigkeit und anderer Eigenschaften. Für die Polydimethylsiloxane besteht ein bevorzugter Mengenbereich von 0,05 bis 0,25 Gew.-%, bezogen auf das ABS-Polymerisat. Die Polymethylphenylsiloxane haben bevorzugt eine Viskosität von $3.10^{-5}$ bis $10^{-3}$ m²·s⁻¹ bei 20°C, die Polydimethylsiloxane eine Viskosität von $5·10^{-5}$ bis $5·10^{-2}$ m²·s⁻¹.

Die Herstellung von Pfropfprodukten ist an sich bekannt. Man kann die Pfropfmonomeren in Gegenwart eines Kautschucklatex in Emulsion polymerisieren. Die Pfropfreaktion wird dann mit einem radikalischen Initiator gestartet. Ist der Kautschuk anvernetzt und werden bei der Pfropfreaktion bestimmte Mengenverhaltnisse von Pfropfmonomeren und Pfropfgrundlagen eingehalten, so ist die Grösse der Kautschukteilchen im Latex bestimmend für die Teilchengrösse des resultierenden Pfropfpolymerisats. Die Pfropfhülle aus chemisch an die Kautschukteilchen gebundenen Ketten des Polymerisats der Pfropfmonomeren ist im Verhältnis dünn und ändert die Grösse des Kautschukteilchens nicht wesentlich. Als Grösse wird hier der $d_{50}$-Wert verstanden d.h., der Durchmesser oberhalb dessen und unterhalb dessen jeweils 50 Gew.-% der Teilchen liegen. Die Propfreaktion ist unvollständig, so dass ihr Produkt als Pfropfprodukt bezeichnet wird. Heben dem eigentlichen Pfropfpolymerisat enthält es auch nichtgepfropfte Copolymere der Pfropfmonomeren.

Die Pfropfprodukte A und B werden in einer solchen Menge eingesetzt, daß das fertige ABS-Polymerisat 5 bis 25 Gew.-%, bevorzugt 5 bis 20 Gew.-%, Kautschuk enthält.

Das den zweiten Bestandteil des ABS-Polymerisats bildende thermoplastische Harz (b) stellt die durchgehende Matrix dar und ist ein Polymerisat oder Copolymerisat von Styrol, α-Methylstyrol/Acrylnitril/Methyl(meth)acrylat oder Maleinsäureanhydrid. Bevorzugt sind Polystyrol, Styrol-Acrylnitril-Copolymerisate mit einem Acrylnitrilgehalt von 20 bis 35 Gew.-%, sowie α-Methylstyrol-Acrylnitril-Copolymerisate mit einem Acrylnitrilgehalt von 20 bis 31 Gew.-%. Das Gewichtsmittel des Molekulargewchtes dieser Harze ist 50.000 bis 300.000 und die molekulare Uneinheitlichkeit $U_n$

$(\frac{M_w}{M_n} - 1 = U_n)$ ist 1,0 – 3,5.

Die thermoplastischen Harze, z. B. Styrol/Acrylnitril oder α-Methylstyrol/Acrylnitril-Copolymerisate können nach bekannten Verfahren hergestellt werden, z. B. durch Massepolymerisation, Lösungspolymerisation, Suspensionspolymerisation und Emulsionspolymerisation.

Pfropfprodukte und thermoplastisches Harz werden getrennt hergestellt. Fallen die Komponenten in Latexform an, so konnen die Latices gemischt und gemeinsam ausgefällt werden.

Bevorzugt werden zugesetzt:

1.  0,05 bis 0,25 Gew.-Tle Polydimethylsiloxan 0,25 bis 3,0 Gew.-Tle Pentaerythrittetrastearat;
2.  0,05 bis 0,25 Gew.-Tle Polydimethylsiloxan 0,25 bis 2,0 Gew.-Tle Pentaerythrittetrastearat 0,05 bis 1,5 Gew.-Tle bis-Stearylamid des Ethylendiamins;
3.  0,05 bis 0,25 Gew.-Tle Polydimethylsiloxan 0,25 bis 3.0 Gew.-Tle bis-Stearylamid des Ethylendiamins;
4.  0,05 bis 0,5 Gew.-Tle Polymethylphenylsiloxan 0,25 bis 2,0 Gew.-Tle Pentaerythrittetrastearat 0,5 bis 1,5 Gew-Tle bis-Stearylamid des Ethylendiamins

Die Kombination 1 liefert optimale Zähigkeit bei gleichzeitig optimaler Härte- und. Wärmestandfestigkeit. Die Kombination 3 liefert hohe Zähigkeit bei sehr guter Fliessfähigkeit. Die Kombinationen 2 und 4 schliesslich geben optimale Kompromisse.

Die ABS-Polymerisate sind Mischungen aus

I  90 bis 10 Gew.-Tln einer bimodalen Pfropfproduktionsmischung aus
   A 90 bis 20 Gew.-Tln eines Pfropfproduktes von 20 - 60 Gew.-Tln Styrol und Acrylnitril im Gewichtsverhältnis 88 : 12 bis 60 : 40 auf 80 - 40 Gew.-Tle eines Butadien-Homo-Polymerisats mit einem Butadien-Homo-Polymerisats mit einem mittleren Teilchendurchmesser $d_{50}$ von 0,35 bis 0,65 μm und
   B 10 bis 80 Gew.-Tln eines Pfropfproduktes von 60 bis 40 Gew.-Tln einer Mischung aus Styrol und Acrylnitril im Gew.-Verhältnis 80 : 20 bis 60 : 40 auf 40 bis 60 Gew.-Tle eines Butadien-Homo-Polymerisats mit einem mittleren Teilchendurchmesser $d_{50}$ von 0,08 bis 0,25 μm und

II  10 bis 90 Gew.-Tln eines Copolymerisats
    C aus Styrol und/oder Methylstyrol einerseites und Acrylnitril andererseits, im Gewichtsverhältnis 80 : 20 bis 60 : 40 bei einem mittleren Molekulargewicht von 50.000 bis 300.000.

Die Polysiloxane können zum ABS-Polymerisat bevorzugt bei der Compoundierung zugefügt werden, indem das Silikonöl direkt in das Knetaggregat, in dem die Durchmischung erfolgt, engegeben wird. Seine Wirkung ist eine Erhöhung der Kerbschlagzähigkeit ohne Beeinträchtigung der übrigen physikalischen Eigenschaften.

**Beispiele**

A. Herstellung und Charakteristik der ABS-Polymerisate

Verfahren 1: Der Latex der Pfropfkautschuke wird mit einem oder mehreren SAN-Copolymerisat-Latices in bestimmtem Mengenverhältnis gemischt. Nach Zugabe einer wässrigen Stabilisatordispersion die pro 100 Gewichtsteile Polymer 0,25 - 1,5 Gew.-Tle eines phenolischen Antioxydants enthält - wird die Latex-Mischung durch Elektrolyt- bzw. Säurezusatz koaguliert. Das resultierende Pulver wird bei einer Temperatur von 70 - 80° C im Vakuumtrockenschrank getrocknet.

Verfahren 2: Der Latex einer Pfropfkautschukmischung wird nach Stabilisatorzusatz koaguliert und zum Pulver aufgearbeitet. Dann wird das SAN-Copolymerisat C eingemischt.

Die benutzten ABS-Pfropfkautschuke und SAN-Copolymerisate sind in Tabelle 1 und 2 näher charakterisiert.

**Tabelle 1:** in den Beispielen benutzte Pfropfkautschuke

| Pfropf-polymer Bezeichnung | Gew.-Verhältnis Pfropfgrundlage zu Pfropfauflage | Gew.-Verhältnis[4] Styrol: AN i.d. Monomer-mischung | mittlerer[1] Teilchendurch messer in $\mu m$ ($d_{50}$) | G-Wert[2] | Zusammensetzung[3] der Pfropfgrundlage B% |
|---|---|---|---|---|---|
| P1 | 50 : 50 | 70 : 30 | ~ 0,4 | 0,55 | 100 |
| P2 | 60 : 40 | 88 : 12 | ~ 0,4 | 0,45 | 100 |
| P3 | 50 : 50 | 70 : 30 | ~ 0,1 | 0,72 | 100 |
| P5 | 80 : 20 | 70 : 30 | 0,1 | 0,16 | 100 |

[1] Ultrazentrifugen-Messungen vergl. W. Scholtan, H. Lange, Kolloidz. und Z Polymere 250 (1972) 783 - 796 bzw. G. Kämpf, H. Schüster, Angew. Makromol. Chemie 14 (1970) 111 - 129. Teilchendurchmesser ist der $d_{50}$-Wert.

[2] Pfropfgrad G (G-Wert) bezeichnet das Verhältnis $\frac{SAN\ gepfropt}{Pfropfgrundlage}$ als dimensionslose Zahl.

[3] B = Butadien

[4] AN = Acrylnitril

**Tabelle 2:** in den Beispielen benutzte SAN- und $\alpha$-Methylstyrol-Acrylnitril-Copolymere

| Copolymerisat-Bezichnung | Copolymerisat-Zusammenset-zung (Gew.-%) | | | Viskosität[1] $\frac{\eta\ spez.}{c}$ | $U_n$-Wert[2] |
|---|---|---|---|---|---|
| | Styrol | AN | $\alpha$-Methylstyrol | | |
| S1 | 74 | : 26 | | 95 | 3,0 |
| S2 | 70 | : 30 | | 70 | 2,0 |
| S3 | 68 | : 32 | | 65 | 2,0 |
| S4 | | 30 | : 70 | 65 | 2,1 |
| S5 | 70 | : 30 | | 110 | 2,5 |

[1] Viskosität $= \frac{\eta\ spez.}{c}$ bei C = 5 g/l MEK, 25°C

[2] $U_n$-Wert $= \frac{M_w}{M_n} - 1$     $M_w$ = Gewichtsmittel der Molmasse, $M_n$ = Zahlenmittel der Molmasse

B. Herstellung der ABS-Compounds

Für die Herstellung der ABS-Polymerisate können bekannte Compoundierungsaggregate verwendet werden, die bei Temperaturen von 140 - 260°C eine homogene Durchmischung gewährleisten. In Frage kommen u.a beheizbare Mischwalzwerke mit nachgeschaltetem Granulator, zweiwellige bzw. vierwellige Schneckenkneter mit nachgeschalteter Granuliervorrichtung sowie Innenmischer und Banbury-Mixer mit nachgeschaltetem Zweiwalzenstuhl und Granulator.

Für die Compoundierung auf einem Banbury-Mixer BR (Pomini-Farrel) gelten für ABS-Polymerisate die folgenden Mischbedingungen:

Massetemperatur: 190 - 225°C
Mischzeiten: 1,5 - 2 Minuten
Cycluszeiten: 2,0 - 4 Minuten

Nach dem Mischen fällt das Material als plastische Masse auf einen Zweiwalzenstuhl (Walze 1 T = 160°C, Walze 2 T = 150°C) und wird in Form eines Bandes abgenommen, das nach Abkühlung granuliert wird.

Allgemeine Rezeptur für die Beschickung des Innenkneters:

ABS-Polymerisat 100,00 Gew.Teile
Gleitmittel 1 x Gew.-Teile
Gleitmittel 2 y Gew.-Teile
Polydimethylsiloxan z Gew.-Teile
Pigmente n Gew.-Teile

C. Prüfmethodik

Aus dem Granulat werden durch Spritzguss bei 220°C Massetemperatur Normkleinstäbe hergestellt. Nach DIN-Methoden werden Kerbschlagzähigkeit, Schlagzähigkeit Härte und Wärmestandfestigkeit nach Vicat B ermittelt. Die Verarbeitbarkeit wird mit dem Flachspiraltest gemäss H. Ebneth. K. Bohm: Fliessfähigkeit von ABS-polymerisaten. Plastverarbeiter 19 (1968) 4, S. 261 - 269, bestimmt. Prüftemperatur 220°C.

**Beispiele 1, 2, 3**

Gemäß den unter B) angegebenen Reaktionsbedingungen werden in eine Innenmischer gemischt:

**Tabelle 3**

| Beispiel | Pfropfpolymerisat Typ | Pfropfpolymerisat Gew.-Tle | SAN-Copolymere Typ | SAN-Copolymere Gew.-Tle | Poly-dimethyl siloxan | Wax[1] | PETS[2] |
|---|---|---|---|---|---|---|---|
| 1 | P2 | 12,6 | S3 | 67,4 | 0,2 | 3,0 | — |
|   | P3 | 20,0 |    |      |     |     |     |
| 2 | P2 | 12,6 | S3 | 67,4 | 0,2 | 2,0 | 1,0 |
|   | P3 | 20,0 |    |      |     |     |     |
| 3 | P2 | 11,0 | S4 | 52,0 | 0,2 | 2,0 | 1,0 |
|   | P3 | 17,0 | S1 | 20,0 |     |     |     |

[1] Wax = Bisstearylamid des Ethylendiamins
[2] PETS = Pentaerithrit-tetrastearat

Nach Weiterverarbeitung gemäss C) wurden an diesen Produkten die folgenden Kenndaten ermittelt (Tabelle 4):

**Tabelle 4**

| Beispiele | 1 | 2 | 3 |
|---|---|---|---|
| Kerbschlagzähigkeit kJ/m² 23°C | 13 | 14 | 14 |
| Kugeleindruckhärte 30 sec N/mm² | 80 | 80 | 94 |
| Vicat-Erweichungs-temp., B | | | 102 |
| Fliesslänge cm Flachspirale 220 | 55 | 52 | 38 |

Wie aus Tabelle 4 ersichtlich, führt die Verwendung von Polydimethylsiloxan zu hervorragenden Produkteigenschaften.

**Patentanspruch**

Verwendung von 0,05 bis 0,5 Gew.-Tln eines flüssigen Polymethylphenylsiloxans oder eines flüssigen Polydimethylsiloxans einer Viskosität von $2,10^{-5}$ bis $10^{-1}$ m²·s⁻¹ bei 20°C, zusammen mit 0,25 bis 5 Gew.-Tln Pentaerythrittetrastearar, Bisstearylamid des Ethylendiamins oder Mischungen daraus, jeweils bezogen auf 100 Gew.-Tle ABS-Polymerisat, zur Verbesserung dessen Kerbschlagzähigkeit und anderer Eigenschaften, wobei das ABS-Polymerisat (100 Gew.-Teile) aus:

I    90 bis 10 Gew.-Tln einer bimodalen Pfropfproduktmischung aus
    A 90 bis 20 Gew.-Tln eines Pfropfproduktes von 20 - 60 Gew.-Tln Styrol und Acrylnitril im Gewichtsverhältnis 88 : 12 bis 60 : 40 auf 80 - 40 Gew.-Tle eines Butadien-Homo-Polymerisats mit einem mittleren Teilchendurchmesser $d_{50}$ von 0.35 bis 0,65 μ und
    B 10 bis 80 Gew.-Tln eines Pfropfprodukten von 60 bis 40 Gew.-Tln einer Mischung aus Styrol und Acrylnitril im Gew.-Verhältnis 80 : 20 bis 60 : 40 auf 40 bis 60 Gew.-Tle eines Butadien-Homo-Polymerisats mit einem mittleren Teilchendurchmesser $d_{50}$ von 0,08 bis 0,25 μ und

II    10 bis 90 Gew.-Tln eines Copolymerisats

C aus Styrol und/oder Methylstyrol einerseits und Acrylnitril andererseits, im Gewichtsverhältnis 80 : 20 bis 60 : 40 bei einem mittleren Molekulargewicht von 50.000 bis 300.000, besteht und wobei Pfropfprodukte A und B und Copolymerisat C getrennt hergestellt wurden.

## Claim

Use of 0.05 to 0.5 parts by weight of a liquid polymethylphenylsiloxane or a liquid polydimethylsiloxane of a viscosity of $2.10^{-5}$ to $10^{-1} m^2 \cdot s^{-1}$ at 20°C, together with 0.25 to 5 parts by weight of pentaerythritol tetrastearate, the bis-stearylamide of ethylene diamine or mixtures thereof, in each case based on 100 parts by weight of ABS polymer, for improving the notched impact strength and other properties thereof, wherein the ABS polymer (100 parts by weight) consists of:

I 90 to 10 parts by weight of a bimodal graft product mixture of

A 90 to 20 parts by weight of a graft product of 20 - 60 parts by weight of styrene and acrylonitrile in a weight ratio of 88 : 12 to 60 : 40 on 80 - 40 parts by weight of a butadiene homopolymer with an average particle diameter $d_{50}$ of 0.35 to 0.65 μm and

B 10 to 80 parts by weight of a graft product of 60 to 40 parts by weight of a mixture of styrene and acrylonitrile in a weight ratio of 80 : 20 to 60 : 40 on 40 to 60 parts by weight of a butadiene homopolymer with an average particle diameter $d_{50}$ of 0.08 to 0.25 μm and

II 10 to 90 parts by weight of a copolymer

C of styrene and/or methylstyrene on the one hand and acrylonitrile on the other hand, in a weight ratio of 80 : 20 to 60 : 40 with an average molecular weight of 50,000 to 300,000, and wherein graft products A and B and the copolymer C have been produced separately.

## Revendication

Utilisation de 0,05 à 0,5 parties en poids d'un polyméthylphénylsiloxanne liquide ou d'un polydiméthylsiloxanne liquide d'une viscosité de $2 \cdot 10^{-5}$ à $10^{-1}$ $m^2 \cdot s^{-1}$ à 20°C, conjointement à 0,25 à 5 parties en poids de tétrastéarate de pentaérythritol, de bis-stéarylamide de l'éthylènediamine ou de leurs mélanges, chaque fois pour 100 parties en poids de polymère ABS, pour l'amélioration de la résistance aux chocs sur barreau entaillé et d'autres propriétés, le polymère ABS (100 parties en poids) consistant en:

I) 90 à 10 parties en poids d'un mélange bimodal de produits greffés de:

A) 90 à 20 parties en poids d'un produit greffé de 20 - 60 parties en poids de styrène et d'acrylonitrile dans le rapport pondéral 88 : 12 à 60 : 40 sur 80 - 40 parties en poids d'un homopolymère de butadiène ayant un diamètre moyen de particules $d_{50}$ de 0,35 à 0,65 μm et

B) 10 à 80 parties en poids d'un produit greffé de 60 à 40 parties en poids d'un mélange de styrène et d'acrylonitrile dans le rapport pondéral 80 : 20 à 60 : 40 sur 40 à 60 parties en poids d'un homopolymère de butadiène ayant un diamètre moyen de particules $d_{50}$ de 0,08 à 0,25 μm et

II) 10 à 90 parties en poids d'un copolymère

C) de styrène et/ou de méthylstyrène d'une part et d'acrylonitrile d'autre part, dans le rapport pondéral de 80 : 20 à 60 : 40 avec un poids moléculaire moyen de 50 000 à 300 000, et les produits greffés A) et B) et le copolymère C) ayant été fabriqués séparément.